# EUROPÄISCHE PATENTSCHRIFT

(11) **EP 3 460 289 B1**
(45) Veröffentlichungstag und Bekanntmachung des Hinweises auf die Patenterteilung: **22.12.2021**
(21) Anmeldenummer: 18196610.2
(22) Anmeldetag: 25.09.2018
(51) Int. Cl.: F16G 13/14, F16G 15/04

(54) **KETTENSCHLOSS ZUR VERBINDUNG ZWEIER AUS KETTENGLIEDERN GEBILDETEN KETTEN**
CHAIN LOCK FOR CONNECTING TWO FROM CHAINS MADE OF LINKS
JOINT DE CHAÎNE DESTINÉ À RACCORDER DEUX CHAÎNES CONSTITUÉES DE MAILLONS DE CHAÎNE

(30) Priorität: 26.09.2017 DE 102017122335
(43) Veröffentlichungstag der Anmeldung: 27.03.2019
(73) Patentinhaber: RUD Ketten Rieger & Dietz GmbH u. Co. KG, 73432 Aalen (DE)
(72) Erfinder: Jaros, Julian, 73430 Aalen (DE); Nuding, Andreas, 73312 Geislingen (DE); Lang, Werner, 73463 Westhausen (DE)
(74) Vertreter: Flügel Preissner Schober Seidel

(56) Entgegenhaltungen:
- WO-A1-2013/033157
- CN-Y- 2 893 303
- DE-U1-202006 016 032

## Beschreibung

Die Erfindung betrifft ein Kettenschloss zur Verbindung zweier aus Kettengliedern gebildeten Ketten, aufweisend einen ersten Kettenbügel, einen zweiten Kettenbügel und einen Verriegelungsbolzen, der die Kettenbügel lösbar miteinander verbindet.

Ein Kettenbügel der eingangs genannten wird zur Verbindung zweier aus Kettengliedern gebildeten Ketten, insbesondere zweier Gliederketten, wie beispielsweise einer Rundstahlkette, die in einem Kettenförderer, wie beispielsweise einem Becherwerk oder einem Trogkettenförderer, eingesetzt werden, verwendet. Das Kettenschloss bildet somit ein Kettenglied der zwei miteinander verbundenen Ketten.

Bekannte Kettenschlösser weisen zwei zueinander kongruente Kettenbügel auf, die formschlüssig ineinandergreifen, wobei jeder der Kettenbügel in ein Kettenglied der miteinander zu verbindenden Ketten eingreift. Zur Sicherung der Kettenbügel vor einem Auseinanderziehen wird ein Sicherungsmittel verwendet, das zwischen den beiden Kettenbügeln positioniert wird, so dass der zwischen den beiden Kettenbügeln bestehende Formschluss aufrechterhalten wird.

Aus DE 32 26 636 A1 geht ein Kettenschloss für Gliederketten hervor, das zwei lösbar miteinander verbundene Kettenbügel aufweist, wobei jeder der Kettenbügel eine Rastausnehmung umfasst, in die ein zur Verriegelung der beiden Kettenbügel dienendes Spreizelement angeordnet ist. Das Spreizelement ist in einer Spreizstellung durch ein Sicherungselement arretierbar, welches mit dem Spreizelement eine vormontierte Einheit bildet, wobei das Sicherungselement ein Halteteil für das ungespreizte Spreizelement, ein Spreizteil sowie ein Rastteil für das gespreizte Spreizelement aufweist. Zum formschlüssigen Fixieren der beiden Kettenbügel wird das Spreizelement zwischen die Kettenbügel eingeführt, wobei das Spreizelement vom Halteteil des Sicherungselements gehalten wird. Sobald das Spreizelement in den Bereich der Rastaufnehmungen überführt ist, wird es zusammen mit dem Sicherungselement um 90° gedreht. In dieser Lage stützen sich Teile des Spreizelements auf Schultern der Rastaufnehmungen ab, so dass anschließend das Sicherungselement mit Hilfe eines Hammers in das Spreizelement eingeschlagen wird, bis der Rastteil des Sicherungselements sich von innen gegen das Spreizelement anlegt und die Schlosshälften verriegelt.

Ferner geht aus DE 34 44 008 C1 ein Kettenschloss für Gliederketten hervor, das zwei Kettenbügel aufweist, die über ein Stütz- und Verriegelungselement miteinander verbunden sind. Das Stütz- und Verriegelungselement weist einen Bolzen auf, an dessen Umfang federnde Rastmittel zu seiner Arretierung zwischen Innenschenkel der Kettenbügel versehen ist.

Des Weiteren geht aus CN 2 893 303 Y ein Kettenschloss hervor, das zwei Kettenbügel und einen die beiden Kettenbügel miteinander verbindenden Verschlusskörper aufweist. Der Verschlusskörper weist einen H-förmigen Abschnitt auf, der in eine von den beiden Kettenbügeln gebildete H-förmige Aufnahmeöffnung eingesetzt wird. Der Verschlusskörper wird mittels einer aufgesetzten Buchse in der Aufnahmeöffnung gesichert.

Zudem geht aus US 2013/0227927 A ein Kettenschloss hervor, das zwei Kettenbügel aufweist, die über einen Verriegelungsbolzen miteinander verbunden sind. Hierzu wird der Verriegelungsbolzen in Aufnahmeöffnungen der Kettenbügel eingesetzt und anschließend um seine Längsachse gedreht. Um ein Aufdrehen des Verriegelungsbolzens zu verhindern, sind zwischen Zapfen der Kettenbügel und dem Verriegelungsbolzen elastische Blöcke angeordnet, die in der verriegelten Position die Vorsprünge des Verriegelungsbolzens in Aussparungen des Kettenschlosses drängen.

Der Erfindung liegt die Aufgabe zugrunde, ein Kettenschloss zu schaffen, das einfach montierbar und kostengünstig ist und gleichzeitig eine geringe Einzelteileanzahl aufweist.

Zur Lösung der Aufgabe wird ein Kettenschloss mit den Merkmalen des Anspruchs 1 vorgeschlagen.

Vorteilhafte Ausgestaltungen des Kettenschlosses sind Gegenstand der abhängigen Ansprüche.

Die vorliegende Erfindung betrifft ein Kettenschloss zur Verbindung zweier aus Kettengliedern gebildeten Ketten, aufweisend einen ersten Kettenbügel, einen zweiten Kettenbügel und einen Verriegelungsbolzen, der die Kettenbügel lösbar miteinander verbindet, wobei jeder Kettenbügel eine Ausnehmung aufweist, die im verbundenen Zustand der Kettenbügel eine Aufnahmeöffnung bilden, in die der Verriegelungsbolzen einsetzbar ist, wobei der Verriegelungsbolzen in einer ersten Position in die Aufnahmeöffnung einsetzbar und zum Sichern der beiden Kettenbügel vor einem Lösen durch Rotation um seine Längsachse in eine zweite Position überführbar ist, wobei die Kettenbügel elastisch ausgebildet sind, und wobei der Verriegelungsbolzen und/oder die Ausnehmungen derart geformt sind, dass beim Überführen des Verriegelungsbolzens von der ersten Position in die zweite Position ein Widerstand auftritt, der aus einem Übermaß zwischen den Ausnehmungen und dem Verriegelungsbolzen besteht, und der zum Überführen in die zweite Position zu überwinden ist, indem die Kettenbügel kurzzeitig elastisch ausgelenkt werden.

Die Sicherung der Kettenbügel vor einem Lösen beziehungsweise Auseinandergreifen resultiert aus der Formgebung, insbesondere eines Oberflächenabschnitts, des Verriegelungsbolzens und/oder der Ausnehmungen. Dabei ist der Verrieglungsbolzen und/oder die Ausnehmungen derart geformt, dass in der ersten Position der Verriegelungsbolzen leicht, das heißt ohne Widerstand, in die Aufnahmeöffnung eingesetzt werden kann, und dass beim Überführen in die zweite Position ein Widerstand auftritt, der sich aus einem Übermaß zwischen dem Verriegelungsbolzen und den Ausnehmungen ergibt. Dieser Widerstand muss überwunden werden, um den Verriegelungsbolzen in die zweite Position zu überführen. In der zweiten Position dient dann das Übermaß beziehungsweise der sich daraus ergebende Widerstand als Aufdrehsicherung für den Verriegelungsbolzen und verhindert so ein Auseinandergreifen und Lösen der Kettenbügel. Somit beruht die Sicherung der Kettenbügel vor einem Auseinandergreifen beziehungsweise Lösen rein auf der geometrischen Formgebung des Verriegelungsbolzens und/oder der Ausnehmungen, insbesondere der geometrischen Formgebung einer Oberflächenkontur beziehungsweise eines Oberflächenabschnitts des Verriegelungsbolzens und/oder der Ausnehmungen. Dadurch ist zur Sicherung der beiden Kettenbügel lediglich ein Verriegelungsbolzen erforderlich, so dass die Einzelteileanzahl reduziert ist und das Kettenschloss kostengünstig in der Herstellung ist. Vorteilhaft tritt das Übermaß in einem Kontaktbereich, insbesondere in einem Kontaktpunkt zwischen dem Verriegelungsbolzen und den Ausnehmungen auf. Die erste Position kann auch als Einsetzposition und die zweite Position kann auch als Verriegelungsposition bezeichnet werden.

Zum Überführen des Verriegelungsbolzens von der ersten Position in die zweite Position wird der Verriegelungsbolzen bevorzugt ca. 90° um seine Längsachse gedreht. Die Drehung des Verriegelungsbolzens um seine Längsachse kann im Uhrzeigersinn als auch gegen den Uhrzeigersinn erfolgen. Zur Rotation des Veriegelungsbolzens kann ein handelsübliches Werkzeug verwendet werden. Dadurch ist das Kettenschloss einfach zu montieren.

Darüber hinaus ist kein weiteres Sicherungselement erforderlich, welches den Verriegelungsbolzen vor einem Auswandern aus der Aufnahmeöffnung sichert, da die Kettenbügel aufgrund ihrer Elastizität eine Klemmkraft auf den Verriegelungsbolzen ausüben, die eine Selbsthemmung erzeugt.

In einer vorteilhaften Ausgestaltung weist der Verriegelungsbolzen erste Formflächen und zweite Formflächen auf, wobei jede der Ausnehmungen eine Gegenformfläche aufweist, und wobei in der ersten Position die ersten Formflächen den Gegenformflächen zugewandt und in der zweiten Position die zweiten Formflächen den Gegenformflächen zugewandt sind. Die ersten Formflächen und/oder die Gegenformflächen sind derart geformt, dass in der ersten Position der Verriegelungsbolzen, insbesondere mit Spiel in die Aufnahmeöffnung einführbar ist. Die zweiten Formflächen und/oder die Gegenformflächen sind ferner derart geformt, dass in der zweiten Position ein Formschluss und/oder Kraftschluss zwischen dem Verriegelungsbolzen und den Kettenbügel besteht. Vorliegend können die Formflächen auch als Funktionsflächen und die Gegenformflächen auch als Gegenfunktionsflächen bezeichnet werden. Ferner können die zweiten Formflächen auch als Klemmflächen bezeichnet werden.

In einer vorteilhaften Ausgestaltung besteht das Übermaß zwischen den Gegenformflächen und den zweiten Formflächen. Somit ergibt sich beim Überführen des Verriegelungsbolzens von der ersten Position in die zweite Position ein Übermaß zwischen den Gegenformflächen und den zweiten Formflächen, welches überwunden werden muss. Insbesondere ergibt sich das Übermaß zwischen den Gegenformflächen und den zweiten Formflächen in einem Kontaktbereich, insbesondere einem Kontaktpunkt, zwischen den Gegenformflächen und den zweiten Formflächen während der Verriegelungsbolzen von der ersten Position in die zweite Position überführt wird.

In einer vorteilhaften Ausgestaltung sind die ersten Formflächen derart geformt, dass die ersten Formflächen in der ersten Position von den Gegenformflächen beabstandet sind, und dass die zweiten Formflächen derart geformt sind, dass die zweiten Formflächen in der zweiten Position formschlüssig an den Gegenformflächen anliegen. Da die ersten Formflächen in der ersten Position von den Gegenformflächen beabstandet sind, ist eine leichte Montage, insbesondere ein leichtes Einsetzen des Verriegelungsbolzens in die Aufnahmeöffnung, möglich. In der zweiten Position liegen die Formflächen formschlüssig in den Ausnehmungen ein, wobei die Kettenbügel miteinander verspannt sind und der Verriegelungsbolzen in der zweiten Position verbleibt.

In einer vorteilhaften Ausgestaltung sind die ersten Formflächen im Querschnitt in Radialrichtung gesehen gewölbt oder eben und die zweiten Formflächen sind im Querschnitt in Radialrichtung gesehen gewölbt. Die ersten Formflächen und die zweiten Formflächen können im Querschnitt in Radialrichtung gesehen kreisbogenförmig sein. Weiterhin vorteilhaft sind die Gegenformflächen im Querschnitt in Radialrichtung gesehen gewölbt.

In einer vorteilhaften Ausgestaltung weisen die ersten Formflächen einen ersten Krümmungsradius und die zweiten Formflächen einen zweiten Krümmungsradius auf, wobei der erste Krümmungsradius ungleich dem zweiten Krümmungsradius ist. Aufgrund der unterschiedlichen Krümmungsradien der beiden Formflächen wird in der ersten Position ein einfaches Einsetzen des Verriegelungsbolzens in die Aufnahmeöffnung ermöglicht. Beim Überführen des Verriegelungsbolzens von der ersten Position in die zweite Position ergibt sich aufgrund des abweichenden zweiten Krümmungsradius zwischen den zweiten Formflächen und den Gegenformflächen ein Übermaß, insbesondere in einem Kontaktbereich beziehungsweise einem Kontaktpunkt, das zum Überführen in die zweite Position überwunden werden muss. Vorteilhaft ist der erste Krümmungsradius größer oder kleiner als der zweite Krümmungsradius.

In einer vorteilhaften Ausgestaltung weisen die Gegenformflächen einen dritten Krümmungsradius auf, wobei der dritte Krümmungsradius kleiner oder gleich dem zweiten Krümmungsradius ist. Dadurch liegen die zweiten Formflächen formschlüssig in den Ausnehmungen ein, so dass eine klemmende Funktion in der zweiten Position realisiert wird, welche eine Selbsthemmung bewirkt. Der dritte Krümmungsradius ist bevorzugt größer als der erste Krümmungsradius, so dass der Verriegelungsbolzen einfach in die Aufnahmeöffnung eingesetzt werden kann.

In einer vorteilhaften Ausgestaltung liegen die Mittelpunkte der Krümmungsradien in einer Ebene, die senkrecht zu der Längsachse ist. Vorteilhaft liegt der Mittelpunkt des ersten Krümmungsradius nicht auf der Längsachse, sondern ist versetzt dazu in der Ebene E angeordnet. Die Mittelpunkte der zweiten und dritten Krümmungsradien liegen auf der Längsachse.

In einer vorteilhaften Ausgestaltung liegen die ersten Formflächen und die zweiten Formflächen einander gegenüber. Dadurch ergibt sich das Übermaß beim Überführen des Verriegelungsbolzens von der ersten Position in die zweite Position zwischen den zweiten Formflächen und den Ausnehmungen an zwei einander gegenüberliegenden Kontaktbereichen beziehungsweise Kontaktpunkten.

In einer vorteilhaften Ausgestaltung weist der Verriegelungsbolzen wenigstens einen Vorsprung auf, der in der zweiten Position in eine in die Ausnehmung eingebrachte Vertiefung eingreift, um den Verriegelungsbolzen vor einem Herausziehen aus der Aufnahmeöffnung zu sichern. Somit dient der Vorsprung als Lagesicherung. Darüber hinaus dient der Vorsprung als Führung für den Verriegelungsbolzen während seiner Rotation um die Längsachse von der ersten Position in die zweite Position. Vorteilhaft weist der Verriegelungsbolzen zwei Vorsprünge auf, die vorzugsweise einander gegenüberliegen, wobei jeder der Vorsprünge in jeweils eine in die Ausnehmungen eingebrachte Vertiefung eingreift.

In einer vorteilhaften Ausgestaltung besteht das Übermaß zwischen den Vertiefungen und dem Vorsprung.

In einer vorteilhaften Ausgestaltung weist der Verriegelungsbolzen endseitig eine umlaufende Fase auf. Die Fase dient als Einführhilfe für den Verriegelungsbolzen in die Aufnahmeöffnung. Bevorzugt weist der Verriegelungsbolzen jeweils endseitig eine umlaufende Fase auf.

In einer vorteilhaften Ausgestaltung weist der Verriegelungsbolzen eine Werkzeugaufnahmeeinrichtung zum Einsetzen eines Werkzeugs auf, um den Verriegelungsbolzen von der ersten Position in die zweite Position zu überführen. Dadurch kann auf einfache Weise mittels eines Werkzeugs, welches in die Werkzeugaufnahmeeinrichtung eingesetzt wird, der Verriegelungsbolzen von der ersten Position in die zweite Position überführt werden. Ferner kann mittels des Werkzeugs ein Moment erzeugt werden, mittels dem der Widerstand überwunden werden kann.

In einer vorteilhaften Ausgestaltung ist die Werkzeugaufnahmeeinrichtung als Innensechskant ausgebildet. Somit kann ein handelsübliches Werkzeug zur Montage der Kettenbügel beziehungsweise zum Verspannen der Kettenbügel verwendet werden.

Die Kettenbügel sind elastisch ausgebildet. Aufgrund ihrer Elastizität kann der Widerstand überwunden werden, indem die Kettenbügel kurzzeitig elastisch ausgelenkt werden, so dass der Verrieglungsbolzen in die zweite Position überführt werden kann. Zudem üben die Kettenbügel aufgrund ihrer Elastizität in der zweiten Position eine Klemmkraft auf den Verriegelungsbolzen aus, die unter Betriebsbedingungen eine Selbsthemmung erzeugt und den Verrieglungsbolzen vor einem Aufdrehen sichert.

In einer vorteilhaften Ausgestaltung weist jeder der Kettenbügel einen ersten Schenkel und einen zweiten Schenkel und einen die beiden Schenkel miteinander verbindenden Verbindungsabschnitt auf, wobei jeder der Schenkel eine Verzahnungskontur aufweist, die im verbundenen Zustand ineinandergreifen, und wobei die zweiten Schenkel im verbundenen Zustand einander zugewandt sind und die die Aufnahmeöffnung bildenden Ausnehmungen aufweisen. Durch die kongruente Ausgestaltung der beiden Kettenbügel ist eine einfache Montage des Kettenschlosses möglich. Vorteilhaft sind die beiden Schenkel elastisch ausgebildet, so dass zum Überwinden des Widerstandes die Schenkel verschwenken und der Verriegelungsbolzen in die zweite Position überführt werden kann, in welcher er formschlüssig in den Ausnehmungen einliegt. In der zweiten Position umschließen die Schenkel den Verriegelungsbolzen und erzeugen so eine Klemmkraft, die eine Selbsthemmung bewirkt.

Im Folgenden werden das Kettenschloss sowie weitere Merkmale und Vorteile anhand von Ausführungsbeispielen näher erläutert, die in den Figuren schematisch dargestellt sind. Hierbei zeigt:
- Figur 1: eine Vorderansicht eines Kettenschlosses aufweisend zwei Kettenbügel und einen Verriegelungsbolzen gemäß einer ersten Ausführungsform;
- Figur 2: eine Seitenansicht des in Figur 1 dargestellten Kettenschlosses;
- Figur 3: eine perspektivische Darstellung eines in Figur 1 dargestellten Kettenbügels;
- Figur 4: eine perspektivische Darstellung des in Figur 1 dargestellten Verriegelungsbolzens;
- Figur 5: eine erste Seitenansicht des in Figur 4 dargestellten Verriegelungsbolzens;
- Figur 6: eine zweite Seitenansicht des in Figur 4 dargestellten Verriegelungsbolzens;
- Figur 7: eine Draufsicht des in Figur 4 dargestellten Verriegelungsbolzens;
- Figur 8: eine Unteransicht des in Figur 4 dargestellten Verriegelungsbolzens;
- Figur 9: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2 mit dem Verriegelungsbolzen in einer ersten Position;
- Figur 10: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2, wobei der Verriegelungsbolzen von der ersten Position in eine zweite Position überführt wird;
- Figur 11: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2 mit dem Verriegelungsbolzen in der zweiten Position;
- Figur 12: eine perspektivische Darstellung eines Verriegelungsbolzens gemäß einer zweiten Ausführungsform;
- Figur 13: eine erste Seitenansicht des in Figur 12 dargestellten Verriegelungsbolzens;
- Figur 14: eine zweite Seitenansicht des in Figur 12 dargestellten Verriegelungsbolzens;
- Figur 15: eine Draufsicht des in Figur 12 dargestellten Verriegelungsbolzens;
- Figur 16: eine Unteransicht des in Figur 12 dargestellten Verriegelungsbolzens;
- Figur 17: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2 mit dem Verriegelungsbolzen gemäß der zweiten Ausführungsform in einer ersten Position;
- Figur 18: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2, wobei der Verriegelungsbolzen gemäß der zweiten Ausführungsform von der ersten Position in eine zweite Position überführt wird; und
- Figur 19: in dem linken Bild einen vergrößerten Ausschnitt des Schnitts entlang der Linie A-A in Figur 2 und in dem rechten Bild einen vergrößerten Ausschnitt des Schnitts entlang der Linie B-B in Figur 2 mit dem Verriegelungsbolzen gemäß der zweiten Ausführungsform in der zweiten Position.

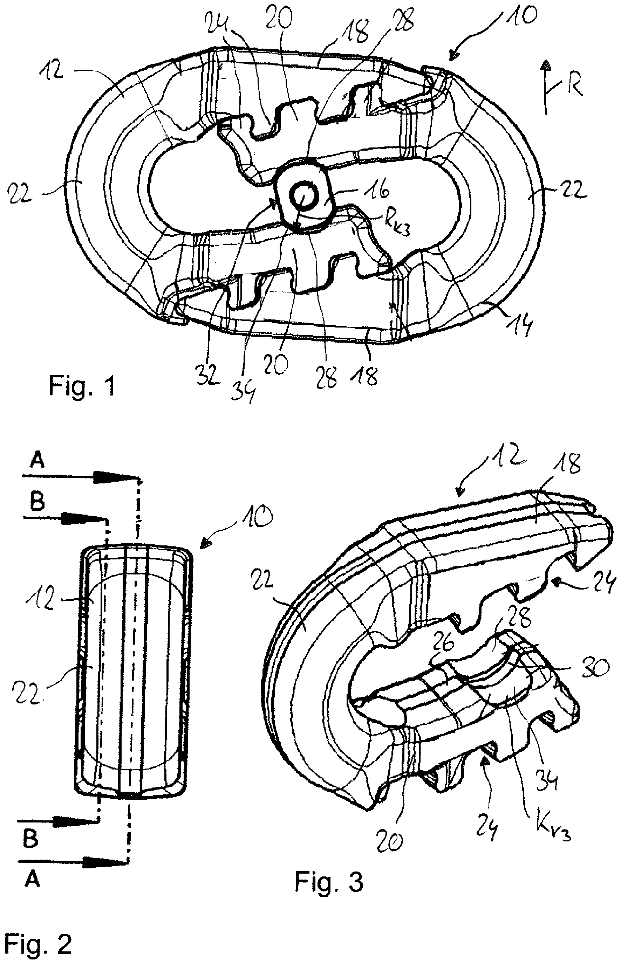

In den Figuren 1 und 2 ist ein Kettenschloss 10 gezeigt, das zur Verbindung zweier nicht dargestellter aus Gliedern gebildeten Ketten, insbesondere zweier Gliederketten, wie beispielsweise einer Rundstahlkette, die in einem Kettenförderer, wie beispielsweise einem Becherwerk oder einem Trogkettenförderer, eingesetzt werden, dient.

Das Kettenschloss 10 weist einen ersten Kettenbügel 12, einen zweiten Kettenbügel 14 und einen Verriegelungsbolzen 16 auf, der die Kettenbügel 12, 14 lösbar miteinander verbindet, in dem der Verriegelungsbolzen 16 die Kettenbügel 12, 14 gegeneinander verspannt. Die beiden Kettenbügel 12, 14 sind kongruent zueinander ausgebildet.

Wie insbesondere in Figur 3 ersichtlich ist, weist jeder Kettenbügel 12, 14 einen ersten Schenkel 18, einen zweiten Schenkel 20 und einen die beiden Schenkel 18, 20 miteinander verbindenden U-förmigen Verbindungsabschnitt 22 auf.

Jeder der Schenkel 18, 20 weist eine Verzahnungskontur 24 auf, wobei die Verzahnungskontur 24 des ersten Schenkels 18 nach innen und die Verzahnungskontur 24 des zweiten Schenkels nach außen weist, so dass im verbundenen Zustand der beiden Kettenbügel 12, 14 die beiden Verzahnungskonturen 24 ineinandergreifen, wie in Figur 1 ersichtlich ist.

Jeder der zweiten Schenkel 20 weist auf einer Innenseite 26, die der Verzahnungskontur 24 des ersten Schenkels 18 zugewandt ist, eine Ausnehmung 28 auf, in die mittig eine Vertiefung 30 eingebracht ist. Im zusammengesetzten Zustand der beiden Kettenbügel 12, 14 bilden die beiden Ausnehmungen 28 eine Aufnahmeöffnung 32 zum Einsetzen des Verriegelungsbolzens 16.

Die Ausnehmung 28 weist eine Gegenformfläche 34 auf, die durch die Vertiefung 30 in zwei Gegenformflächenabschnitte unterteilt ist. Die Gegenformfläche 34 ist im Querschnitt in Radialrichtung R gesehen kreisbogenförmig ausgebildet und weist eine dritte Krümmung Kᵣ₃ auf. Die dritte Krümmung Kᵣ₃ weist einen dritten Krümmungsradius R_{K3} auf, dessen Mittelpunkt auf einer Längsachse L des Verriegelungsbolzens 16 liegt, wie in Figur 1 erkennbar ist.

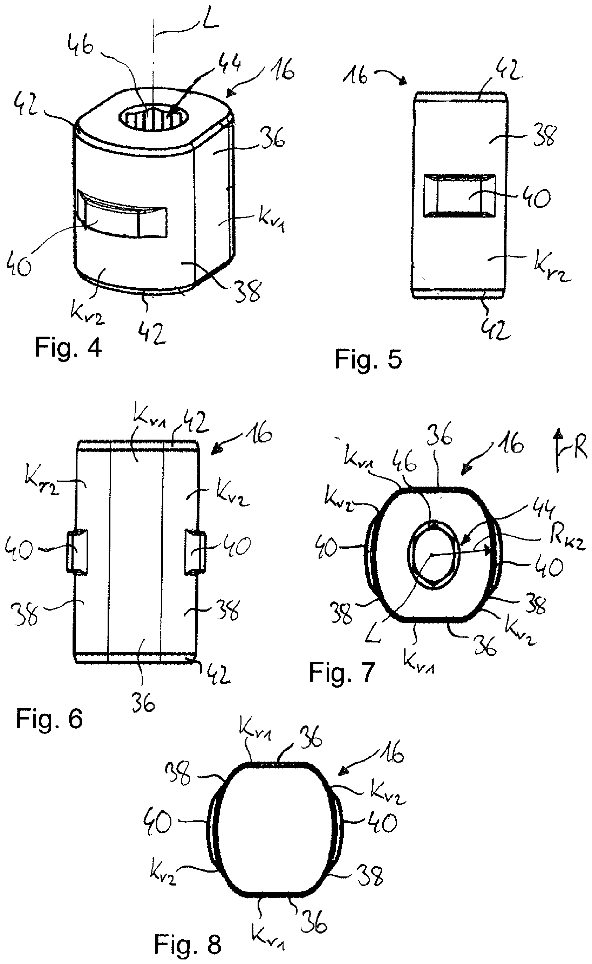

In den Figuren 4 bis 8 ist der Verriegelungsbolzen 16 dargestellt. Der Verriegelungsbolzen 16 weist erste Formflächen 36 und zweite Formflächen 38 auf, wobei die ersten Formflächen 36 einander gegenüberliegen und die zweiten Formflächen 38 einander gegenüberliegen.

Die ersten Formflächen 36 sind im Querschnitt in Radialrichtung R gesehen eben ausgebildet. Da die ersten Formflächen 36 eben sind, weisen die ersten Formflächen 36 eine erste Krümmung Kᵣ₁ und einen ersten Krümmungsradius R_{K1} auf, die Null sind.

Die zweiten Formflächen 38 sind im Querschnitt in Radialrichtung R gesehen kreisbogenförmig ausgebildet und weisen eine zweite Krümmung Kᵣ₂ auf. Die zweite Krümmung Kᵣ₂ weist einen zweiten Krümmungsradius R_{K2} auf, dessen Mittelpunkt auf der Längsachse L des Verriegelungsbolzens 16 liegt. Der zweite Krümmungsradius R_{K2} ist ungleich dem ersten Krümmungsradius R_{K1} und größer als der dritte Krümmungsradius R_{K3}.

Wie in den Figuren 4 bis 8 ersichtlich ist, weist der Verriegelungsbolzen 16 zwei Vorsprünge 40 auf, wobei jeweils ein Vorsprung 40 auf einer ersten Formfläche 36 angeordnet ist. Die Vorsprünge 40 liegen in den Vertiefungen 30 ein, wenn der Verriegelungsbolzen 16 die beiden Kettenbügel 12, 14 gegeneinander verspannt. Somit dienen die Vorsprünge 40 als Sicherung vor einem Herausziehen des Verriegelungsbolzens 16 aus der Aufnahmeöffnung 32.

Der Verriegelungsbolzen 16 ist zudem jeweils endseitig mit einer umlaufenden Fase 42 versehen, die ein Einsetzen des Verriegelungsbolzens 16 in die Aufnahmeöffnung 32 erleichtert.

Zudem weist der Verriegelungsbolzen 16 eine Werkzeugaufnahmeeinrichtung 44 auf, in die ein nicht dargestelltes Werkzeug eingesetzt werden kann. Die Werkzeugaufnahmeeinrichtung 44 ist als ein Innensechskant 46 ausgebildet.

Zum Verbinden und Verspannen der beiden Kettenbügel 12, 14 mittels des Verriegelungsbolzens 16 werden die Kettenbügel 12, 14 zunächst derart zusammengesetzt, dass die Verzahnungskonturen 24 formschlüssig ineinandergreifen und die Ausnehmungen 28 die Aufnahmeöffnung 32 bilden.

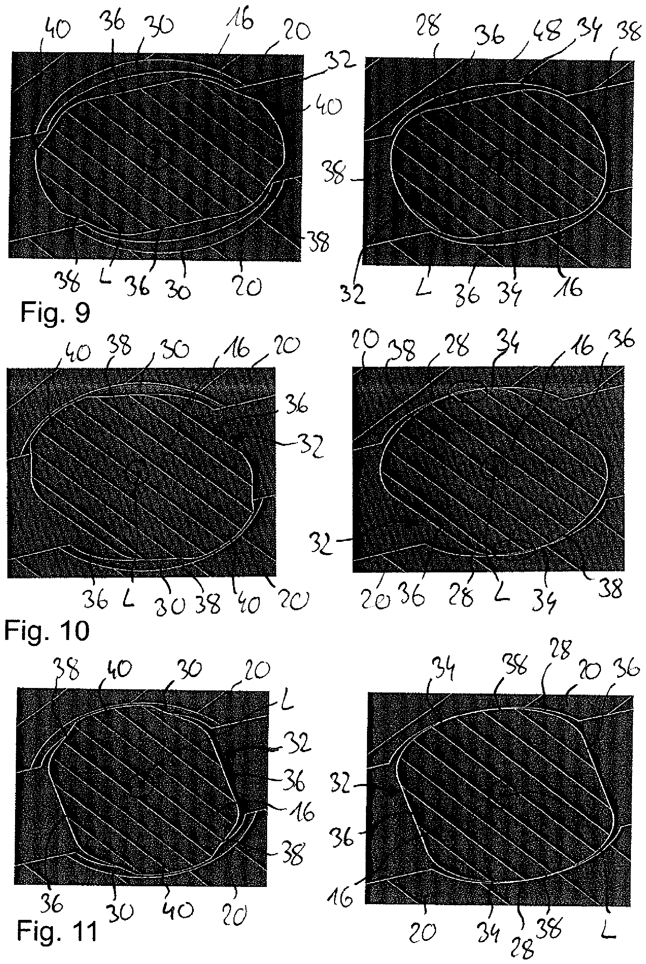

Im Anschluss daran wird der Verriegelungsbolzen 16 in die Aufnahmeöffnung 32 derart eingesetzt, dass die ersten Formflächen 36 den Gegenformflächen 34 zugewandt sind, wie in Figur 9 dargestellt ist. Diese Position entspricht einer ersten Position, die auch als Einsetzposition bezeichnet werden kann. In der ersten Position, in welcher die ersten Formflächen 36 den Gegenformflächen 34 zugewandt sind, sind die ersten Formflächen 36 von den Gegenformflächen 34 beabstandet, so dass sich zwischen den ersten Formflächen 36 und den Gegenformflächen 34 ein Spalt 48 ergibt. Dadurch ist der Verriegelungsbolzen 16 mit Spiel innerhalb der Aufnahmeöffnung 32 angeordnet. Das Spiel wird dadurch erreicht, dass die ersten Formflächen 36 im Querschnitt in Radialrichtung R gesehen eben sind.

Zum Überführen des Verriegelungsbolzens 16 in eine in Figur 11 dargestellte zweite Position wird ein nicht dargestelltes Werkzeug in den Innensechskant 46 der Werkzeugaufnahmeeinrichtung 44 eingesetzt, und der Verriegelungsbolzen 16 wird um seine Längsachse L im Uhrzeigersinn gedreht, wie in Figur 10 dargestellt ist. Die Rotation des Verriegelungsbolzens 16 um seine Längsachse L kann auch entgegen dem Uhrzeigersinn erfolgen. Die zweite Position kann auch als Verriegelungsposition bezeichnet werden.

Während der Rotation des Verriegelungsbolzens 16 gelangen die zweiten Formflächen 38 in Überdeckung mit den Gegenformflächen 34, wobei infolge der Formgebung der zweiten Formflächen 38, insbesondere der zweiten Krümmung Kᵣ₂, und der Gegenformflächen 34, insbesondere der dritten Krümmung Kᵣ₃,in einem Kontaktbereich beziehungsweise einem Kontaktpunkt ein Übermaß zwischen den zweiten Formflächen 38 und den Gegenformflächen 34 auftritt. Das Übermaß ist in Figur 10 in dem rechten Bild im Bereich der eingezeichneten Kreise zu erkennen.

Zum Überführen des Verriegelungsbolzens 16 in die in Figur 11 dargestellte zweite Position muss der sich aus dem Übermaß ergebende Widerstand überwunden werden. Da die Schenkel 18, 20 elastisch ausgebildet sind, werden die Schenkel 18, 20 beim Überwinden des Widerstands kurzzeitig elastisch ausgelenkt, so dass der Verriegelungsbolzen 16 in die in Figur 11 dargestellte zweite Position überführt werden kann, in welcher die zweiten Formflächen 38 in den Ausnehmungen 28 einliegen, insbesondere an den Gegenformflächen 34 formschlüssig anliegen. In der zweiten Position üben die Schenkel 18, 20 aufgrund ihrer Elastizität eine Klemmkraft auf den Verriegelungsbolzen 16 aus, die unter Betriebsbedingungen eine Selbsthemmung erzeugt. Dadurch sind die beiden Kettenbügel 12, 14 fest miteinander verspannt und der Verriegelungsbolzen 16 bleibt in der zweiten Position.

Wie zudem in den Figuren 9 bis 11 ersichtlich ist, greift der Vorsprung 40 nach dem Überführen des Verriegelungsbolzens 16 von der ersten Position in die zweite Position in die Vertiefungen 30 ein. Der Vorsprung 40 sichert den Verriegelungsbolzen 16 vor einem Herausziehen aus der Aufnahmeöffnung 32. Zudem dient der Vorsprung 40 als Führung während der Rotation des Verriegelungsbolzens 16 von der ersten Position in die zweite Position.

Nachfolgend wird eine weitere Ausführungsform für den Verriegelungsbolzen 16 beschrieben, wobei für gleiche oder funktionsgleiche Teile dieselben Bezugszeichen verwendet werden.

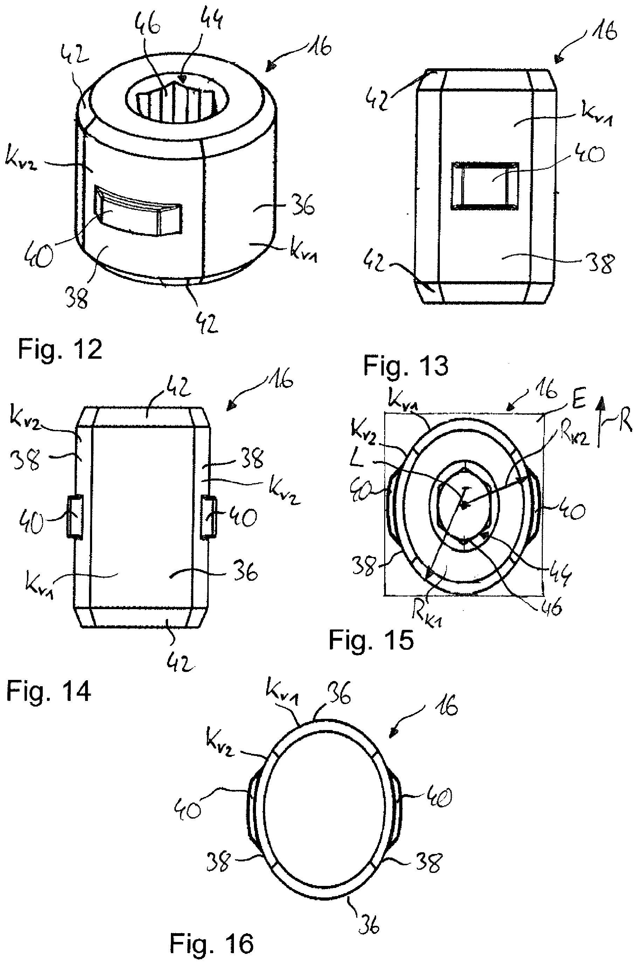

In den Figuren 12 bis 19 ist eine zweite Ausführungsform des Verriegelungsbolzens 16 dargestellt, die sich von der ersten Ausführungsform in der Formgebung der ersten Formflächen 36 und in der Position des Kontaktbereichs beziehungsweise Kontaktpunkts, in welchem das Übermaß zwischen dem Verriegelungsbolzen 16 und den Ausnehmungen 28 auftritt, unterscheidet.

Wie in den Figuren 12 bis 16 ersichtlich ist, sind die ersten Formflächen 36 im Querschnitt in Radialrichtung R gesehen kreisbogenförmig ausgebildet und weisen eine erste Krümmung Kᵣ₁ mit einem ersten Krümmungsradius R_{K1} auf. Die Mittelpunkte der Krümmungsradien R_{K1}, R_{K2}, R_{K3} liegen in einer Ebene E senkrecht zur Längsachse L des Verriegelungsbolzens 16. Insbesondere liegt der Mittelpunkt des ersten Krümmungsradius R_{K1} nicht auf der Längsachse L, sondern ist versetzt dazu in der Ebene E angeordnet, wie in Fig. 15 ersichtlich ist. Die Mittelpunkte der zweiten und dritten Krümmungsradien R_{K2}, R_{K3} liegen auf der Längsachse L.

In dem in den Figuren 12 bis 19 gezeigten Ausführungsbeispiel ist der erste Krümmungsradius R_{K1} ungleich dem zweiten Krümmungsradius R_{K2} beziehungsweise dritten Krümmungsradius Rₖ₃. Dadurch ergibt sich der Spalt 48 zwischen den ersten Formflächen 36 und den Gegenformflächen 34, so dass der Verriegelungsbolzen 16 in der ersten Position mit Spiel innerhalb der Aufnahmeöffnung 32 angeordnet ist.

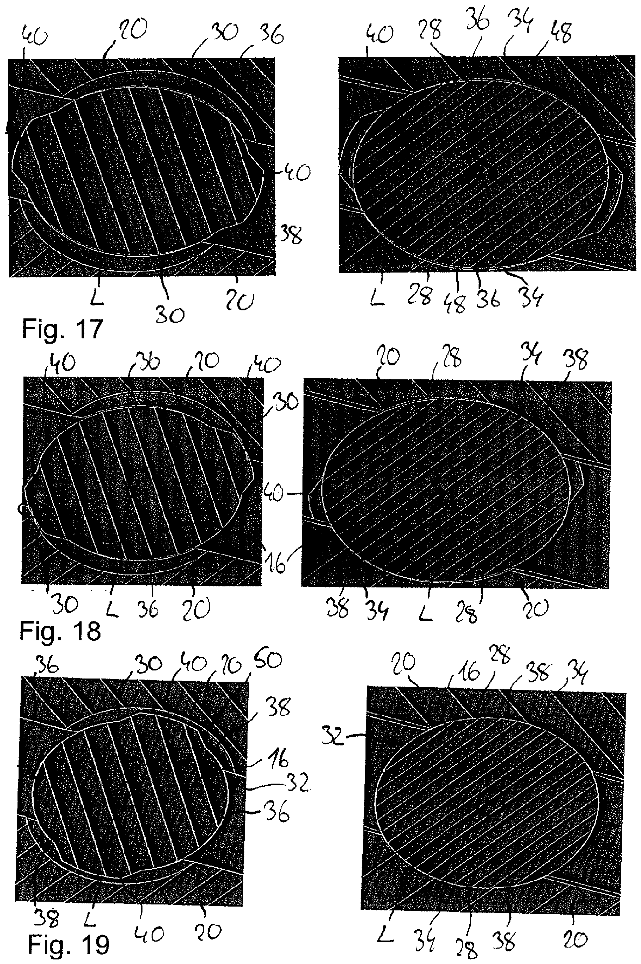

Beim Überführen des Verriegelungsbolzens von der in Figur 17 dargestellten ersten Position in die in Figur 19 dargestellte zweite Position besteht zwischen den Vorsprüngen 40 und den Vertiefungen 30 ein Übermaß, wie im linken Bild der Figur 18 im Bereich der eingezeichneten Kreise dargestellt ist. Wie zudem im rechten Bild der Figur 18 zu erkennen ist, liegen bereits Teilbereiche der zweiten Formflächen 38 schon auf Maß mit den Gegenformflächen 34.

Der sich aus dem Übermaß ergebende Widerstand muss durch Krafteinwirkung überwunden werden, so dass der Verriegelungsbolzen 16 in die in Figur 19 dargestellte zweite Position überführt wird, in welcher die zweiten Formflächen 38 in den Ausnehmungen 28 formschlüssig einliegen beziehungsweise an den zweiten Formflächen 38 formschlüssig anliegen, wie in dem rechten der Figur 19 dargestellt ist. Die Vorsprünge 40 sind in der zweiten Position von dem Grund 50 der Vertiefungen 30 beabstandet, wie in dem linken Bild der Figur 19 ersichtlich ist.

In der zweiten Position üben die Schenkel 18, 20 aufgrund ihrer Elastizität eine Klemmkraft auf den Verriegelungsbolzen 16 aus, die unter Betriebsbedingungen eine Selbsthemmung erzeugt, so dass die beiden Kettenbügel 12, 14 fest miteinander verspannt sind. Ein Aufdrehen wird durch das sich zwischen dem Vorsprung 40 und den Vertiefungen 30 einstellende Übermaß verhindert.

### Bezugszeichenliste

- 10: Kettenschloss
- 12: erster Kettenbügel
- 14: zweiter Kettenbügel
- 16: Verriegelungsbolzen
- 18: erster Schenkel
- 20: zweiter Schenkel
- 22: Verbindungsabschnitt
- 24: Verzahnungskontur
- 26: Innenseite
- 28: Ausnehmung
- 30: Vertiefung
- 32: Aufnahmeöffnung
- 34: Gegenformfläche
- 36: erste Formfläche
- 38: zweite Formfläche
- 40: Vorsprung
- 42: umlaufende Fase
- 44: Werkzeugaufnahmeeinrichtung
- 46: Innensechskant
- 48: Spalt
- 50: Grund

- R: Radialrichtung
- L: Längsachse
- Kᵣ₁: erste Krümmung
- Kᵣ₂: zweite Krümmung
- Kᵣ₃: dritte Krümmung
- Rₖ₁: erster Krümmungsradius
- Rₖ₂: zweiter Krümmungsradius
- Rₖ₃: dritter Krümmungsradius
- E: Ebene

## Patentansprüche

1. Kettenschloss (10) zur Verbindung zweier aus Gliedern gebildeten Ketten, aufweisend einen ersten Kettenbügel (12), einen zweiten Kettenbügel (14) und einen Verriegelungsbolzen (16), der die Kettenbügel (12, 14) lösbar miteinander verbindet, wobei jeder Kettenbügel (12, 14) eine Ausnehmung (28) aufweist, die im verbundenen Zustand der Kettenbügel (12, 14) eine Aufnahmeöffnung (32) bilden, in die der Verriegelungsbolzen (16) einsetzbar ist, wobei der Verriegelungsbolzen (16) in einer ersten Position in die Aufnahmeöffnung (32) einsetzbar und zum Sichern der beiden Kettenbügel (12, 14) vor einem Lösen durch Rotation um seine Längsachse (L) in eine zweite Position überführbar ist, wobei die Kettenbügel (12, 14) elastisch ausgebildet sind, und wobei der Verrieglungsbolzen (16) und/oder die Ausnehmungen (28) derart geformt sind, dass beim Überführen des Verriegelungsbolzens (16) von der ersten Position in die zweite Position ein Widerstand auftritt, der aus einem Übermaß zwischen den Ausnehmungen (28) und dem Verriegelungsbolzen (16) besteht, und der zum Überführen in die zweite Position zu überwinden ist, indem die Kettenbügel (12, 14) kurzzeitig elastisch ausgelenkt werden.

2. Kettenschloss (10) nach Anspruch 1, **dadurch gekennzeichnet, dass** der Verriegelungsbolzen (16) erste Formflächen (36) und zweite Formflächen (38) aufweist, wobei jede der Ausnehmungen (28) eine Gegenformfläche (34) aufweist, und wobei in der ersten Position die ersten Formflächen (36) den Gegenformflächen (34) zugewandt und in der zweiten Position die zweiten Formflächen (38) den Gegenformflächen (34) zugewandt sind.

3. Kettenschloss (10) nach Anspruch 2, **dadurch gekennzeichnet, dass** das Übermaß zwischen den Gegenformflächen (34) und den zweiten Formflächen besteht (38).

4. Kettenschloss (10) nach Anspruch 2 oder 3, **dadurch gekennzeichnet, dass** die ersten Formflächen (36) derart geformt sind, dass die ersten Formflächen (36) in der ersten Position von den Gegenformflächen (34) beabstandet sind, und dass die zweiten Formflächen (38) derart geformt sind, dass die zweiten Formflächen (38) in der zweiten Position formschlüssig an den Gegenformflächen (34) anliegen.

5. Kettenschloss (10) nach einem der Ansprüche 2 bis 4, **dadurch gekennzeichnet, dass** die ersten Formflächen (36) im Querschnitt in Radialrichtung (R) gesehen gewölbt oder eben sind, und dass die zweiten Formflächen (38) im Querschnitt in Radialrichtung (R) gesehen gewölbt sind.

6. Kettenschloss (10) nach einem der Ansprüche 2 bis 5, **dadurch gekennzeichnet, dass** die ersten Formflächen (36) einen ersten Krümmungsradius (Rₖ₁) und die zweiten Formflächen (38) einen zweite Krümmungsradius (Rₖ₂) aufweisen, wobei der erste Krümmungsradius (Rₖ₁) ungleich dem zweiten Krümmungsradius (Rₖ₂) ist.

7. Kettenschloss (10) nach Anspruch 6, **dadurch gekennzeichnet, dass** die Gegenformflächen (34) einen dritten Krümmungsradius (Rₖ₃) aufweisen, wobei der dritte Krümmungsradius (Rₖ₃) kleiner oder gleich dem zweiten Krümmungsradius (Rₖ₂) ist.

8. Kettenschloss nach einem der Ansprüche 6 oder 7, **dadurch gekennzeichnet, dass** die Mittelpunkte der Krümmungsradien (Rₖ₁, Rₖ₂, Rₖ₃) in einer Ebene (E) liegen, die senkrecht zu der Längsachse (L) ist.

9. Kettenschloss (10) nach einem der vorhergehenden Ansprüche, **dadurch gekennzeichnet, dass** die ersten Formflächen (36) und die zweiten Formflächen (38) einander gegenüberliegen.

10. Kettenschloss (10) nach einem der vorhergehenden Ansprüche, **dadurch gekennzeichnet, dass** der Verrieglungsbolzen (16) wenigstens einen Vorsprung (40) aufweist, der in der zweiten Position in eine in die Ausnehmung (28) eingebrachte Vertiefung (30) eingreift, um den Verriegelungsbolzen (16) vor einem Herausziehen aus der Aufnahmeöffnung (32) zu sichern.

11. Kettenschloss (10) nach Anspruch 10, **dadurch gekennzeichnet, dass** das Übermaß zwischen den Vertiefungen (30) und dem Vorsprung (40) besteht.

12. Kettenschloss (10) nach einem der vorhergehenden Ansprüche, **dadurch gekennzeichnet, dass** der Verriegelungsbolzen (16) endseitig eine umlaufende Fase (42) aufweist.

13. Kettenschloss (10) nach einem der vorhergehenden Ansprüche, **dadurch gekennzeichnet, dass** der Verriegelungsbolzen (16) eine Werkzeugaufnahmeeinrichtung (44) zum Einsetzen eines Werkzeugs aufweist, um den Verriegelungsbolzen (16) von der ersten Position in die zweite Position zu überführen.

14. Kettenschloss (10) nach Anspruch 13, **dadurch gekennzeichnet, dass** die Werkzeugaufnahmeeinrichtung (44) als Innensechskant (46) ausgebildet ist.

15. Kettenschloss (10) nach einem der vorhergehenden Ansprüche, **dadurch gekennzeichnet, dass** jeder der Kettenbügel (12, 14) einen ersten Schenkel (18) und einen zweiten Schenkel (20) und einen die beiden Schenkel (18, 20) miteinander verbindenden Verbindungsabschnitt (22) aufweist, wobei jeder der Schenkel (18, 20) eine Verzahnungskontur (24) aufweist, die im verbundenen Zustand ineinandergreifen, und wobei die zweiten Schenkel (20) im verbundenen Zustand einander zugewandt sind und die die Aufnahmeöffnung (32) bildenden Ausnehmungen (28) aufweisen.

## Claims

1. A chain connector (10) for connecting two chains formed from links, comprising a first chain shackle (12), a second chain shackle (14) and a locking pin (16) detachably connecting the chain shackles (12, 14) with each other, wherein each chain shackle (12, 14) has a recess (28) which, in the connected state of the chain shackles (12, 14) forms an accommodating opening (32) into which the locking pin (16) can be inserted, wherein the locking pin (16) can be inserted into the accommodating opening (32) ) in a first position, and transferred into a second position by rotating it about its longitudinal axis (L) in order to secure the two chain shackles (12, 14) against disengaging, wherein the chain shackles (12, 14) are configured to be elastic, and wherein the locking pin (16) and/or the recesses (28) are shaped such that, when the locking pin (16) is transferred from the first position into the second position, a resistance arises, which is constituted by an oversize between the recesses (28) and the locking pin (16) and which, for the transfer into the second position, is to be overcome by the chain shackles (12, 14) being elastically deflected for a short time.

2. The chain connector (10) according to claim 1, **characterized in that** the locking pin (16) has first shaped surfaces (36) and second shaped surfaces (38), wherein each of the recesses (28) has a shaped counter-surface (34), and wherein, in the first position, the first shaped surfaces (36) face towards the shaped counter-surfaces (34) and, in the second position, the second shaped surfaces (38) face towards the shaped counter-surfaces (34).

3. The chain connector (10) according to claim 2, **characterized in that** the oversize is provided between the shaped counter-surfaces (34) and the second shaped surfaces (38).

4. The chain connector (10) according to claim 2 or 3, **characterized in that** the first shaped surfaces (36) are shaped such that the first shaped surfaces (36) are spaced apart from the shaped counter-surfaces (34) in the first position, and that the second shaped surfaces (38) are shaped such that the second shaped surfaces (38) rest positively against the shaped counter-surfaces (34) in the second position.

5. The chain connector (10) according to any one of the claims 2 to 4, **characterized in that** the first shaped surfaces (36), viewed in the radial direction (R), are curved or planar in cross section, and the second shaped surfaces (38), viewed in the radial direction (R), are curved in cross section.

6. The chain connector (10) according to any one of the claims 2 to 5, **characterized in that** the first shaped surfaces (36) have a first radius of curvature (Rₖ₁) and the second shaped surfaces (38) have a second radius of curvature (Rₖ₂), wherein the first radius of curvature (Rₖ₁) is unequal to the second radius of curvature (Rₖ₂).

7. The chain connector (10) according to claim 6, **characterized in that** the shaped counter-surfaces (34) have a third radius of curvature (Rₖ₃), wherein the third radius of curvature (Rₖ₃) is less than or equal to the second radius of curvature (Rₖ₂).

8. The chain connector according to any one of the claims 6 or 7, **characterized in that** the centers of the radii of curvature (Rₖ₁, Rₖ₂, Rₖ₃) lie in a plane (E) that is perpendicular to the longitudinal axis (L).

9. The chain connector (10) according to any one of the preceding claims, **characterized in that** the first shaped surfaces (36) and the second shaped surfaces (38) are situated opposite each other.

10. The chain connector (10) according to any one of the preceding claims, **characterized in that** the locking pin (16) has at least one protrusion (40) which, in the second position, engages with a depression (30) incorporated into the recess (28) in order to secure the locking pin (16) against being pulled out of the accommodating opening (32).

11. The chain connector (10) according to claim 10, **characterized in that** the oversize is provided between the depressions (30) and the protrusion (40).

12. The chain connector (10) according to any one of the preceding claims, **characterized in that** the locking pin (16) has a circumferentially extending bevel (42) at its end.

13. The chain connector (10) according to any one of the preceding claims, **characterized in that** the locking pin (16) has a tool accommodating feature (44) for inserting a tool for transferring the locking pin (16) from the first position into the second position.

14. The chain connector (10) according to claim 13, **characterized in that** the tool accommodating feature (44) is configured as a hexagon socket (46).

15. The chain connector (10) according to any one of the preceding claims, **characterized in that** each of the chain shackles (12, 14) has a first leg (18) and a second leg (20) and a connecting portion (22) connecting the two legs (18, 20) with each other, wherein each of the legs (18, 20) has a toothing contour (24) that engage each other in the connected state, and wherein the second legs (20), in the connected state, face towards each other and have the recesses (28) forming the accommodating openings (32).

## Revendications

1. Joint de chaîne (10) pour relier deux chaînes formées de maillons, comprenant un premier étrier de chaîne (12), un second étrier de chaîne (14) et un tenon de verrouillage (16) qui relie de manière amovible les étriers de chaîne (12, 14) l'un à l'autre, dans lequel chaque étrier de chaîne (12, 14) présente un évidement (28) qui, à l'état relié des étriers de chaîne (12, 14), forment une ouverture de réception (32) dans laquelle le tenon de verrouillage (16) peut être inséré, le tenon de verrouillage (16) peut être inséré, dans une première position, dans l'ouverture de réception (32) et peut être transféré jusque dans une seconde position par rotation autour de son axe longitudinal (L), afin de bloquer les deux étriers de chaîne (12, 14) à l'encontre d'un détachement, les étriers de chaîne (12, 14) sont réalisés élastiques, etle tenon de verrouillage (16) et/ou les évidements (28) sont formés de telle sorte que, lors du transfert du tenon de verrouillage (16) de la première position jusque dans la seconde position, une résistance se produit qui consiste en une surdimension entre les évidements (28) et le tenon de verrouillage (16) et qui doit être surmontée pour le transfert jusque dans la seconde position, du fait que les étriers de chaîne (12, 14) sont brièvement déviés élastiquement.

2. Joint de chaîne (10) selon la revendication 1, **caractérisé en ce que** le tenon de verrouillage (16) comprend des premières surfaces façonnées (36) et des secondes surfaces façonnées (38), chacun des évidements (28) comprenant une surface façonnée antagoniste (34), et, dans la première position, les premières surfaces façonnées (36) sont tournées vers les surfaces façonnées antagonistes (34), et, dans la seconde position, les secondes surfaces façonnées (38) sont tournées vers les surfaces façonnées antagonistes (34).

3. Joint de chaîne (10) selon la revendication 2, **caractérisé en ce que** la surdimension existe entre les surfaces façonnées antagonistes (34) et les secondes surfaces façonnées (38).

4. Joint de chaîne (10) selon la revendication 2 ou 3, **caractérisé en ce que** les premières surfaces façonnées (36) sont formées de telle sorte que les premières surfaces façonnées (36) sont espacées des surfaces façonnées antagonistes (34) dans la première position, et **en ce que** les secondes surfaces façonnées (38) sont formées de telle sorte que les secondes surfaces façonnées (38) s'appuient en coopération de forme contre les surfaces façonnées antagonistes (34) dans la seconde position.

5. Joint de chaîne (10) selon l'une des revendications 2 à 4, **caractérisé en ce que** les premières surfaces façonnées (36) sont bombées ou plates en section transversale, vues dans la direction radiale (R), et **en ce que** les secondes surfaces façonnées (38) sont bombées en section transversale, vues dans la direction radiale (R).

6. Joint de chaîne (10) selon l'une des revendications 2 à 5, **caractérisé en ce que** les premières surfaces façonnées (36) présentent un premier rayon de courbure (Rₖ₁), et les secondes surfaces façonnées (38) présentent un second rayon de courbure (Rₖ₂), le premier rayon de courbure (Rₖ₁) étant inégal du second rayon de courbure (Rₖ₂).

7. Joint de chaîne (10) selon la revendication 6, **caractérisé en ce que** les surfaces façonnées antagonistes (34) présentent un troisième rayon de courbure (Rₖ₃), le troisième rayon de courbure (Rₖ₃) étant inférieur ou égal au second rayon de courbure (Rₖ₂).

8. Joint de chaîne selon l'une des revendications 6 ou 7, **caractérisé en ce que** les centres des rayons de courbure (Rₖ₁, Rₖ₂, Rₖ₃) sont situés dans un plan (E) perpendiculaire à l'axe longitudinal (L).

9. Joint de chaîne (10) selon l'une des revendications précédentes, **caractérisé en ce que** les premières surfaces façonnées (36) et les secondes surfaces façonnées (38) sont opposées les unes aux autres.

10. Joint de chaîne (10) selon l'une des revendications précédentes, **caractérisé en ce que** le tenon de verrouillage (16) comprend au moins une saillie (40) qui, dans la seconde position, s'engage dans un renfoncement (30) ménagé dans l'évidement (28), afin de bloquer le tenon de verrouillage (16) à l'encontre d'une extraction hors de l'ouverture de réception (32).

11. Joint de chaîne (10) selon la revendication 10, **caractérisé en ce que** la surdimension existe entre les renfoncements (30) et la saillie (40).

12. Joint de chaîne (10) selon l'une des revendications précédentes, **caractérisé en ce que** le tenon de verrouillage (16) présente un chanfrein circonférentiel (42) à son extrémité.

13. Joint de chaîne (10) selon l'une des revendications précédentes, **caractérisé en ce que** le tenon de verrouillage (16) présente un moyen de réception d'outil (44) pour insérer un outil, afin de transférer le tenon de verrouillage (16) de la première position à la seconde position.

14. Joint de chaîne (10) selon la revendication 13, **caractérisé en ce que** le moyen de réception d'outil (44) est réalisé sous forme d'hexagone interne (46).

15. Joint de chaîne (10) selon l'une des revendications précédentes, **caractérisé en ce que** chacun des étriers de chaîne (12, 14) présente une première branche (18) et une seconde branche (20) ainsi qu'une portion de liaison (22) reliant les deux branches (18, 20) l'une à l'autre, chacune des branches (18, 20) présentant un contour denté (24) qui, à l'état relié, s'engagent l'un dans l'autre, et les secondes branches (20) étant tournées l'une vers l'autre, à l'état relié, et présentant les évidements (28) formant l'ouverture de réception (32).
